# EUROPÄISCHE PATENTSCHRIFT

(11) **EP 2 463 662 B1**
(45) Veröffentlichungstag und Bekanntmachung des Hinweises auf die Patenterteilung: **24.07.2019**
(21) Anmeldenummer: 11192399.1
(22) Anmeldetag: 07.12.2011
(51) Int. Cl.: B65G 51/30, B65G 51/32, G01N 35/04, G01N 35/00

(54) **Station einer Rohrpostanlage**
Station of a tube conveyor system
Station d'un transporteur à tube

(30) Priorität: 13.12.2010 AT 76110 U
(43) Veröffentlichungstag der Anmeldung: 13.06.2012
(73) Patentinhaber: Ing. Sumetzberger GmbH, 1110 Wien (AT)
(72) Erfinder: Friedrich, Peter, 1040 Wien (AT)
(74) Vertreter: Müllner, Martin

(56) Entgegenhaltungen:
- WO-A1-01/51392
- WO-A1-2009/068574
- DE-A1- 3 909 478
- DE-C- 204 350
- DE-C- 630 948
- US-A- 2 761 633
- US-A- 4 047 677
- US-A- 4 437 797
- US-A1- 2008 180 225

## Beschreibung

### Technisches Gebiet

Die vorliegende Erfindung betrifft eine Station einer Rohrpostanlage nach dem Oberbegriff von Anspruch 1.

### Stand der Technik

Rohrpostanlagen werden immer dort eingesetzt, wo Material in kleinen Portionen transportiert werden soll, wie zum Beispiel in Banken, Apotheken und in Spitälern. Solche Anlagen bestehen aus Sende- und Empfangsstationen sowie einem Netzwerk an Rohren. Vorzugsweise wird das zu transportierende Material in Rohrposthülsen transportiert. Die kleinen zu transportierenden Einheiten (in Spitälern und Laboratorien Proberöhrchen mit Blut oder biologischem Material) werden dabei oft in den Rohrposthülsen in eigenen Einsätzen, wie z.B. in der Beschreibung der WO 2009/068574 A dargelegt, transportiert.

Eine Rohrpoststation mit automatischer Ausladefunktionseinheit für den Inhalt der Rohrposthülsen und dessen Übergabe zu einer Analysestation beziehungsweise zu einer anderen Weiterverarbeitung ist unter anderem bekannt aus der eben zitierten WO 2009/068574 A . Dabei werden Rohrposthülsen automatisch entladen und der Inhalt, Proberöhrchen, entweder an eine Analyseeinheit weitergegeben oder, wenn der Inhalt der Sendung nicht in dieser Analyseeinheit automatisch verarbeitet werden kann, in einer Rohrposthülse zu einem entsprechenden Labor weiterverschickt. Die leeren Hülsen werden im selben Rohr zurückgeschickt, in dem sie in die Station gelangt sind.

Auch gemäß US 4047677 A ist eine Station mit einem kombinierten Sende-/Empfangsrohr 18 vorgesehen. Weiters gibt es drei Stutzen 20, 22 und 24, von denen ein Stutzen 20 zum Zuführen einer Rohrposthülse und die beiden anderen Stutzen 22, 24 zum Ausschleusen einer Rohrposthülse dienen.

In DE 3909478 A1 ist eine reine Empfangsstation beschrieben. Dieser Empfangsstation ist ein Zwischenspeicher vorgeschaltet. Das Fahrrohr führt nicht direkt zur Empfangsstation, sondern zum Zwischenspeicher, und der Zwischenspeicher ist mit der Empfangsstation durch eine weitere Rohrleitung verbunden. Eine ankommende Hülse fährt in einen Rohrstutzen des Zwischenspeichers ein, dann wird der Zwischenspeicher samt dem Rohrstutzen verdreht, bis der Rohrstutzen mit der weiteren Rohrleitung fluchtet, und dann wird die Hülse über die weitere Rohrleitung der Empfangsstation zugeführt.

US 2008/180225 A1 beschreibt Rohrposthülsen mit RFID-Chips, sodass die Rohrposthülsen an verschiedenen Stellen der Rohrpostanlage identifiziert werden können.

In US 4437797 A ist eine Durchfahrtsstation beschrieben, in die - wie bei jeder Durchfahrtstation zwingend notwendig - zwei miteinander fluchtende Rohre münden. Sowohl in Durchfahrtsposition als auch in der Sende- und in der Empfangsposition sind diese beiden Rohre strömungstechnisch miteinander verbunden. Von dieser Schrift geht der Oberbegriff von Patentanspruch 1 aus. Aus US 2761633 A ist eine Bremsvorrichtung für Rohrposthülsen bekannt, die zwei Rohrposthülsen aufnehmen kann.

WO 01/51392 A1 beschreibt schließlich eine Rohrpostanlage, mit der von mehreren Stellen aus Rohrposthülsen in einen Speicher geschickt werden können. Gedacht ist dabei an Geld, das aus Sicherheitsgründen in den an sicherer Stelle aufgestellten Speicher geschickt wird. Eine Rücksendung von Hülsen ist nicht beschrieben.

In modernen Krankenhausanlagen werden immer häufiger zentrale Labors installiert, um Kosten, Ressourcen und Zeit zu sparen. Von mehreren Stellen eines Krankenhauses (Notaufnahme, Operationssaal, Pathologie etc.) werden Blutproben, Gewebeproben und sonstige zu analysierende Proben in ein zentrales Labor gesendet, wo sie dann analysiert werden. Für Transportzwecke müssen daher solche Krankenhaus-Transportanlagen groß dimensioniert werden, d.h. es kommen viele Stationen und sehr viele Rohrposthülsen zum Einsatz. Somit erlangen Lösungen, die eine rasche Abarbeitung ermöglichen, und die damit verbundene Logistik immer mehr Bedeutung.

Bei großen Sendefrequenzen weist die eingangs erwähnte Station mit einem Rohr, in dem die Rohrposthülsen sowohl ankommen als auch geleert wieder zurückgeschickt werden, zu wenig Kapazität auf. Wenn z.B. aus der Pathologie eine Rohrposthülse abgeschickt wird, dann müssen alle anderen Stationen (also z.B. die Notaufnahme) warten, bis die Hülse aus der Pathologie bei der Station im Labor ankommt, entleert wird und leer wieder zurückgeschickt wird. Erst dann ist das Rohr frei, und die

Hülse aus der Notaufnahme kann abgesandt werden.

### Kurzbeschreibung der Erfindung

Aufgabe der vorliegenden Erfindung ist es daher, eine Station der eingangs genannten Art vorzuschlagen, die die vorgenannten Nachteile vermeidet und die Sendefrequenzen erhöht.

Gelöst wird diese Aufgabe bei einer Station der eingangs genannten Art durch die kennzeichnenden Merkmale von Patentanspruch 1.

Durch diese Maßnahmen wird eine Anbindung einer Station an ein Mehrhülsentransportsystem sichergestellt. Bei solch einem Mehrhülsentransportsystem können mehrere Hülsen nahezu zeitgleich abgesandt werden. Sie liegen dann nach der Ankunft vor der Station (genauer vor dem Vereinzeler) unmittelbar hintereinander. Durch den Vereinzeler wird erreicht, dass stets nur eine Rohrposthülse in die Station gelangt, wo sie automatisch entladen wird und danach (also leer) durch den bewegbaren Schlitten an das Senderohr übergeben wird. Da die leere Hülse in einem eigenen Rohr zurücktransportiert wird, stört es nicht, dass bereits weitere Hülsen im Empfangsrohr "warten".

Der dazu erforderliche technische Aufwand ist relativ gering, es muss nur die für die Station erforderliche Technik (wie z.B. ein Riementrieb) auf einem bewegbaren Schlitten montiert werden.

Vorteilhaft ist es dabei, wenn der Ausladefunktionseinheit eine wegschwenkbare Kontrolleinheit nachgeschaltet ist. Nach dem Öffnen und dem darauf folgenden Entleeren der Rohrposthülsen sollte die Rohrposthülse leer sein. Die Kontrolleinheit, die - um Kollisionen zu vermeiden - beim Ausladen weggeschwenkt werden kann, kann dies - nachdem sie nach dem Ausladen zurückgeschwenkt wurde - überprüfen, sodass der jeweils erforderliche nächste Schritt veranlasst werden kann und nicht irrtümlich eine halbvolle Rohrposthülse in weiterer Folge zurückgeschickt wird.

Weiters ist günstiger Weise vorgesehen, dass die Station eine Identifizierungseinrichtung besitzt beziehungsweise eine solche der Station vorgeschaltet ist. Ein automatisches Erkennen der Zieladresse einer Hülse und eine Identifikation vorteilhafter Weise durch RFID-Transponder sowie das Erkennen eventueller Falschsendungen und die darauf folgende Steuerung ersparen zeitraubende Irrfahrten der Hülsen bzw. falsche Verarbeitungen deren Inhalts.

Als Vorteil erweist sich, wenn die Station eine Öffnung zum Ausschleusen von Rohrposthülsen besitzt, der eine Ausschleusposition zugeordnet ist, und wenn der Schlitten zwischen der Ausschleuseposition, der Empfangsposition, der Sendeposition und der Ausladeposition bewegbar gelagert ist. Damit können z.B. Hülsen, die sich nicht automatisch entleeren lassen, aus dem System ausgeschleust werden. Auch können Hülsen, deren Zielort unklar ist, ausgeschleust werden. Dieses Ausscheiden von Falschsendungen hilft, Fehler frühzeitig zu korrigieren. Durch die drei Positionen muss eine Falschsendung nicht zurückgesendet werden wie die leeren Sendungen, sondern kann an einer separaten Stelle wieder richtig ins System eingespeist werden.

Positiv wirkt sich aus, wenn der der Station vorgeschaltete Vereinzeler mindestens ein Förderelement besitzt, das in Richtung Rohrmitte federbelastet ist. Als Förderelemente kommen Förderrollen oder Förderbänder in Frage. Durch solche Förderelemente werden die Rohrposthülsen sanft und langsam bewegt, und in weiterer Folge wird verhindert, dass mehrere Hülsen zugleich in die Station gelangen.

Als günstig erweist sich, wenn sich zwischen dem Vereinzeler und der Station mindestens ein Schieber zum kurzen Stillstand und anschließender Freigabe einer Rohrposthülse angebracht ist. Dadurch wird eine Ruheposition der Hülse, die zum Identifizieren genutzt werden kann, sowie eine exakte Positionierung zur Übergabe an die Station erreicht. Sobald der Schieber öffnet und eine Hülse in die Station gelangen lässt, wird der Vereinzeler aktiviert und lässt genau eine weitere Hülse auf den mittlerweile wieder geschlossenen Schieber gleiten.

Die Anbindung an eine Analysestation bzw. eine Weiterverarbeitung kann von oben oder unten erfolgen. Eine Anbindung von unten ist in der schon genannten WO 2009/068574 A für Proberöhrchen beschrieben. Bei einer Anbindung von oben kann man den Inhalt einfach herausfallen lassen, wie dies in der Beschreibungseinleitung der AT 402396 B erwähnt ist, und über eine Rutsche mit einem im Anschluss seitlich befindlichen Förderband mit abstehenden Leisten zur Vereinzelung von Proberöhrchen weitertransportieren, wie dies z.B. aus der JP 2000019182 A bekannt ist.

### Kurze Beschreibung der Zeichnungsfiguren

Die Erfindung soll anhand der Zeichnungen detaillierter beschrieben werden.

Eine bevorzugte Ausführungsform einer erfindungsgemäßen Station mit Anbindung an ein Rohrpostsystem ist schematisch in Fig. 1a dargestellt; Fig. 1b zeigt eine Variante zu Fig. 1a; Fig. 2 zeigt schematisch eine mögliche Anbindung an eine Analysestation mit Zufuhr von unten; Fig. 3 zeigt schematisch eine mögliche Anbindung an eine Analysestation mit Zufuhr von oben.

### Beschreibung der Ausführungsarten

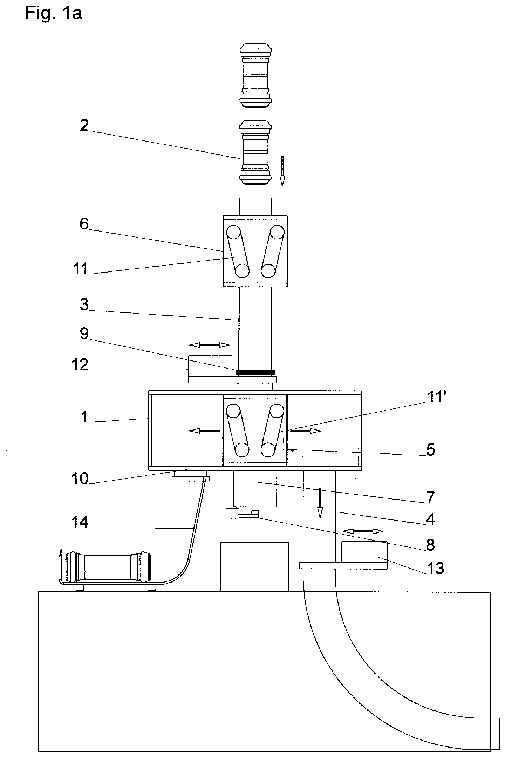

Gemäß Fig. 1a gelangen Rohrposthülsen 2 in einem Mehrhülsentransportsystem, wie in großen Krankenhäusern erwünscht, in ein Empfangsrohr 3 einer Station 1. Diese Station 1 ist zweckmäßiger Weise so ausgelegt, dass sie unterschiedliche Hülsenlängen und Hülsenformen handhaben kann.

Die in Fahrtrichtung vorderste Rohrposthülse 2 gelangt zunächst in den Vereinzeler 6, wo sie durch die in Fahrtrichtung zusammenlaufend ausgerichteten Förderbänder 11 eines Riementriebs gehalten oder bewegt werden kann. Sie befindet sich nun in Warteposition. Die Förderbänder 11 bewegen eine Rohrposthülse 2 langsam in Richtung Station 1, sodass diese auf einen Schieber 12 stößt, der sich vorerst in Geschlossenstellung befindet. Die Rohrposthülse 2 ist in dieser Stellung dann exakt zur Aufnahme in die Station 1 positioniert. Ist die Station 1 zur Aufnahme einer Rohrposthülse 2 bereit, wird durch Bewegung des Schiebers 12 normal zur Fahrtrichtung die Rohrposthülse freigegeben, und die Rohrposthülse 2 gelangt in die Station 1. Der Schieber 12 kann nun wieder geschlossen werden, und danach lässt der Vereinzeler 6 eine weitere Rohrposthülse auf den Schieber 12 gleiten.

Bevor die in der Station befindliche Rohrposthülse 2 entleert wird, erkennt eine Identifizierungseinheit 9 automatisch die Rohrposthülse 2 und identifiziert sie vorzugsweise mit Hilfe eines RFID-Transponders. Es kann hierbei eine Falschsendung erkannt, die Sendezeit ermittelt sowie die Zieladresse festgestellt werden. Sendezeiten und andere Daten können danach ausgewertet werden, sei es für Statistikzwecke, sei es für Optimierungszwecke oder ähnliches. Die Identifizierungseinheit kann in die Station 1 integriert sein; bevorzugt ist sie aber unmittelbar vor dem Schieber 12 angeordnet, wo sich die Rohrposthülse 2 für kurze Zeit in Ruhestellung befindet.

In der Station 1 selbst befindet sich ein Schlitten 5, der seinerseits Förderbänder 11', die wie im Vereinzeler 6 angeordnet sind, aufweist und die genau so wie im Vereinzeler 6 vorerst die Rohrposthülse 2 festhalten, um sie später auf und ab zu bewegen.

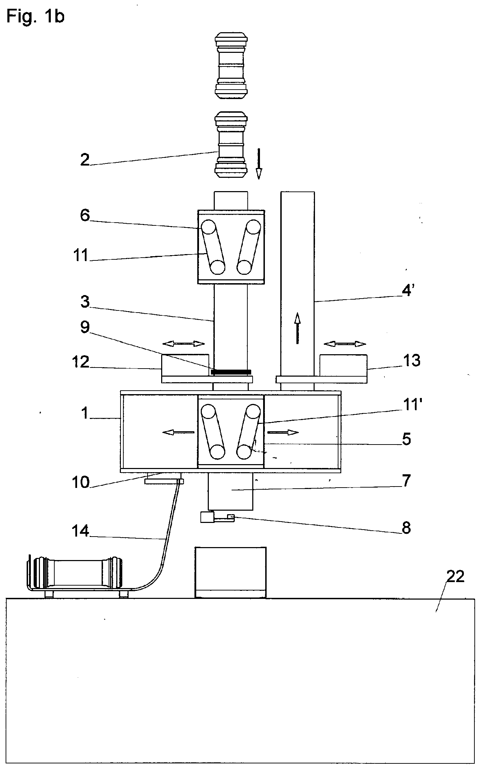

Der Schlitten 5 selbst wird automatisch zwischen zumindest drei Positionen linear verschoben, nämlich zwischen einer Sendeposition, einer Empfangsposition und einer Ausschleuseposition. Gemäß Fig. 1a und 1b befindet sich die Empfangsposition in der Mitte, die Ausschleuseposition links und die Sendeposition rechts. Dies ist aber nicht zwingend, die Positionen können so gewählt werden, wie dies den Platzverhältnissen jeweils am besten entspricht, wobei aber die Sendeposition von der Empfangsposition immer verschieden ist.

Antriebe, Datenerfassungs-, Auswertungs- und Steuereinheiten, die die Bewegungen einzelner Teile wie der Riementriebe oder des Vereinzelers 6 initiieren, sind in den schematischen Darstellungen in den Figuren 1a, 1b, 2 und 3 nicht dargestellt.

Soll der Inhalt der Rohrposthülse 2 in der Station 1 an die Analysestation 22 beziehungsweise zur Weiterverarbeitung weitergegeben werden, was im Regelfall so sein sollte, so ist bei der Ausführung gemäß Fig. 1a und 1b vorerst keine Verschiebung des Schlittens 5 notwendig, da die Ausladefunktionseinheit 7 dem Empfangsrohr 3 bezüglich der Station 1 gegenüberliegend angeordnet ist. Die Hülse wird daher einfach mit Hilfe der Förderbänder 11' zur Ausladefunktionseinheit 7 transportiert.

Auch diese räumliche Anordnung ist nicht zwingend, die Ausladefunktionseinheit könnte z.B. in Fig. 1b genauso gut gegenüber dem Senderohr 4' angeordnet sein, oder es könnte eine vierte Position des Schlittens für die Ausladefunktionseinheit vorgesehen sein.

Diese Ausladefunktionseinheit stellt eine Haupteinheit dar und ist aus AT 402396 B bzw. AT 11306 U1 bekannt, wo jeweils eine Automatikhülse mit dazugehörigem Öffnungsmechanismus geoffenbart ist.

Eine wegschwenkbare Kontrolleinheit 8, die der Ausladefunktionseinheit 7 nachgeschaltet ist, überprüft, ob die Rohrposthülse 2 vollständig entleert ist. Die leere Hülse wird mit Hilfe der Förderbänder 11' wieder komplett in die Station 1 zurückgeholt und der Schlitten 5 wird linear in die Sendeposition verschoben, sodass die Rohrposthülse 2 in das Senderohr 4 eingeschleust werden kann. Im Senderohr 4 erfolgt der Rücktransport unabhängig vom Empfangsrohr 3. Durch das Vorsehen dieses Senderohres 4 erspart man sich Wartezeiten beim Senden weiterer Hülsen zur Station. Dieses Senderohr 4 hat einen weiteren Schieber 13 eingebaut, der nach den logisch erfassten und daraus abgeleiteten Möglichkeiten die Rohrposthülse 2 zum Rücktransport freigibt.

Gemäß Fig. 1a führt das Senderohr 4 nach unten weg. Die jeweilige Position von Senderohr 4 und Empfangsrohr 3 ist beliebig. So könnte z.B. in Fig. 1a die Position der Ausladefunktionseinheit 7 mit der Position des Senderohrs 4 vertauscht sein, sodass in diesem Fall Sendeposition und Empfangsposition des Schlittens 6 identisch wären und die Ausladeposition des Schlittens davon verschieden wäre. Fig. 1b unterscheidet sich von Fig. 1a dadurch, dass ein nach oben wegführendes Senderohr 4' (anstelle des nach unten wegführenden Senderohrs 4) vorgesehen ist. Hier sind Sendeposition und Empfangsposition des Schlittens 6 zwangsläufig verschieden. Es wäre aber denkbar, das Rohr 10 unter dem Senderohr 4' vorzusehen, sodass in diesem Fall Sendeposition des Schlittens und Ausschleuseposition des Schlittens identisch wären (ebenso wie Empfangsposition und Ausladeposition).

Sollte die Rohrposthülse 2 in der Station 1 nicht automatisch verarbeitet werden können, z.B. weil es sich um eine Schwenkdeckelhülse handelt oder weil sie gar nicht zu dieser Station gesendet hätte werden sollen, so transferiert der Schlitten 5 diese Rohrposthülse 2 zur Öffnung 10, wo die Förderbänder 11' die Rohrposthülse 2 auf eine Freifahrrutsche 14 ausschleusen. Anstatt einer Freifahrrutsche 14 kann auch ein Korb vorgesehen sein, in den die Rohrposthülsen 2 fallen.

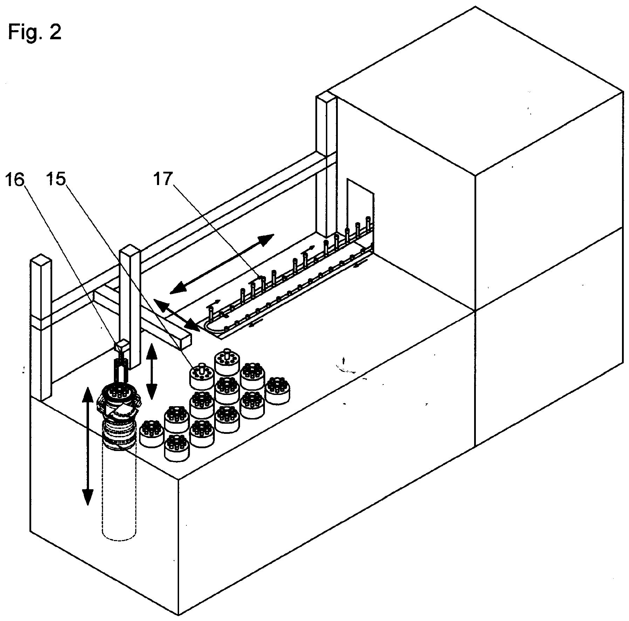

Fig. 2 zeigt die Übergabe der Proberöhrchen an die Analysestation 22 mit Zufuhr von unten. Hierbei arbeitet man mit Einsätzen 15, die von einem Laborroboter 16 aus der geöffneten Rohrposthülse 2 entnommen und abgestellt werden. In einem weiteren Schritt werden die Proberöhrchen einzeln aus dem Einsatz 15 automatisch entnommen und einem Förderband für Proberöhrchen 17 zugeführt.

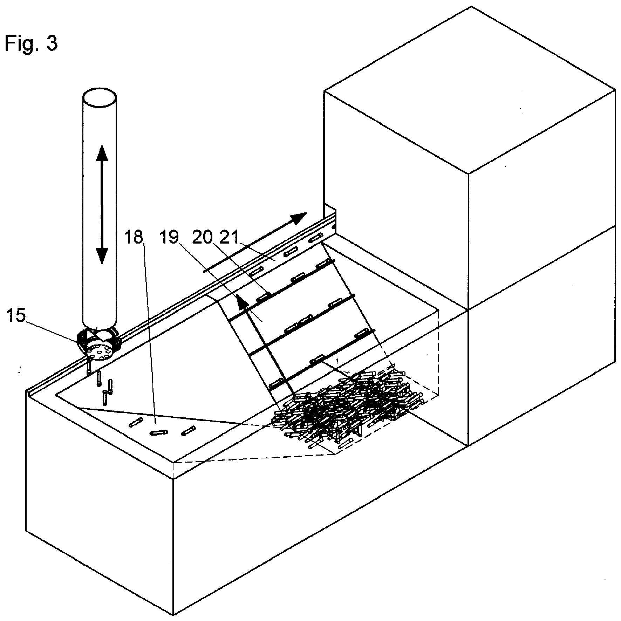

Fig. 3 zeigt eine Anbindung an die Analysestation 22 mit Zufuhr von oben. Dies entspricht also den Fig. 1a und 1b. Hierbei fallen die Proberöhrchen nach dem Öffnen der Rohrposthülse 2 auf Grund der Schwerkraft auf eine Rutsche 18 und werden am unteren Ende der Rutsche 18 gesammelt. In diesem Sammelbereich ist von der Rutsche 18 aus gesehen ein seitliches Förderband 19 mit normal zur Fläche des seitlichen Förderbands 19 angeformten Leisten 20 vorgesehen. Die Leisten 20 nehmen einzelne Proberöhrchen auf und heben sie zu einem linearen Förderband 21 hinauf. Dieses transportiert die Röhrchen zur Analysestation 22.

Die beiden Anbindungen an die Analysestation 22, wie in Fig. 2 und 3 beschrieben, dienen nicht nur zum Transport der Proberöhrchen, sie vereinzeln auch die Proberöhrchen.

Eine Station und deren Anbindung in der eben beschriebenen Ausführungsform löst die Problematik eines hohen Sendeaufkommens insbesondere in Krankenhäusern zu Spitzenzeiten.

### Liste der Bezugszeichen

Station 1
Rohrposthülse 2
Empfangsrohr 3
Senderohr 4
Schlitten 5
Vereinzeler 6
Ausladefunktionseinheit 7
Kontrolleinheit 8
Identifizierungseinheit 9
Öffnung 10 (zur Freifahrrutsche)
Förderbänder 11
Schieber 12
Weiterer Schieber 13
Freifahrrutsche 14
Einsatz 15
Laborroboter 16
Förderband für Proberöhrchen 17
Rutsche 18
Seitliches Förderband 19
Leisten 20
Lineares Förderband 21
Analysestation 22

## Patentansprüche

1. Station (1) einer Rohrpostanlage zur Beförderung von Rohrposthülsen (2), deren Inhalt portionsweise, vorzugsweise in Proberöhrchen, geliefert wird, wobei mindestens zwei Rohre (3, 4) in die Station münden, wobei das eine Rohr ein Empfangsrohr (3) und das andere Rohr ein Senderohr (4) ist,
**dadurch gekennzeichnet, dass** der Station (1) ein Vereinzelner (6) vorgelagert ist, eine automatische Ausladefunktionseinheit (7) für den Inhalt der Rohrposthülsen (2) und dessen Übergabe zu einer Analysestation (22) beziehungsweise zu einer anderen Weiterverarbeitung vorhanden ist, wobei im Senderohr (4) die Rohrposthülsen (2) unabhängig vom Empfangsrohr (3) rücktransportierbar sind, und wobei in der Station (1) dem Empfangsrohr (3), dem Senderohr (4) und der Ausladefunktionseinheit (7) jeweils eine Empfangsposition, eine Sendeposition und eine Ausladeposition zugeordnet sind, wobei die Sendeposition von der Empfangsposition verschieden ist, und dass in der Station (1) ein zumindest zwischen diesen verschiedenen Positionen bewegbarer Schlitten (5) gelagert ist.

2. Station (1) nach Anspruch 1, **dadurch gekennzeichnet, dass** der Ausladefunktionseinheit (7) eine wegschwenkbare Kontrolleinheit (8) nachgeschaltet ist.

3. Station (1) nach einem der Ansprüche 1 oder 2, **dadurch gekennzeichnet, dass** die Station (1) eine Identifizierungseinrichtung (9) besitzt beziehungsweise eine solche der Station (1) vorgeschaltet ist.

4. Station (1) nach Anspruch 3, **dadurch gekennzeichnet, dass** die Station (1) eine Öffnung (10) zum Ausschleusen von Rohrposthülsen (2) besitzt, der eine Ausschleusposition zugeordnet ist, und dass der Schlitten (5) zwischen der Ausschleuseposition, der Empfangsposition, der Sendeposition und der Ausladeposition bewegbar gelagert ist.

5. Station (1) nach einem der Ansprüche 1 bis 4, **dadurch gekennzeichnet, dass** der der Station (1) vorgeschaltete Vereinzelner (6) mindestens ein Förderelement besitzt, das in Richtung Rohrmitte federbelastet ist.

6. Station (1) nach einem der Ansprüche 1 bis 5, **dadurch gekennzeichnet, dass** sich zwischen dem Vereinzelner (6) und der Station (1) mindestens ein Schieber (12) zum kurzen Stillstand und anschließender Freigabe einer Rohrposthülse angebracht ist.

## Claims

1. Station (1) of a pneumatic tube system for conveying pneumatic tube sleeves (2) the content of which is supplied in portions, preferably in sample tubes, wherein at least two tubes (3, 4) open out into the station, one tube being a receiving tube (3) and the other tube being a transmitting tube (4),
**characterized in that** a separater (6) is arranged upstream of the station (1), an automatic unloading function unit (7) is present for the content of the pneumatic tube sleeves (2) and their transfer to an analysis station (22) or to another processing, respectively, wherein in the transmitting tube (4) the pneumatic tube sleeves (2) can be sent back independently of the receiving tube (3), and wherein in the station (1) a receiving position, a transmitting position and an unloading position is associated with the receiving tube (3), the transmitting tube (4) and the unloading function unit (7), the transmitting position being different from the receiving position, and that a carriage (5) movable at least between these different positions is mounted in the station (1).

2. Station (1) according to claim 1, **characterized in that** a control unit (8) pivotable away is arranged downstream of the unloading function unit (7).

3. Station (1) according to any of claims 1 or 2, **characterized in that** the station (1) has an identification device (9) or an identification device (9) is arranged upstream of the station (1), respectively.

4. Station (1) according to Claim 3, **characterized in that** the station (1) has an opening (10) for discharging pneumatic tube sleeves (2), the opening beeing associated with a discharging position, and that the carriage (5) is mounted movably between the discharging position, the receiving position, the transmitting position and the unloading position.

5. Station (1) according to any of claims 1 to 4, **characterized in that** the separater (6) arranged upstream of the station (1) has at least one conveying element which is spring-loaded toward the centre of the pipe.

6. Station (1) according to any of claims 1 to 5, **characterized in that** least one slide (12) is attached between the separater (6) and the station (1) for a short stop and a subsequent release of a pneumatic tube sleeve.

## Revendications

1. Terminal (1) d'un système de transport par tubes pneumatiques destiné à transporter des curseurs (2) dont le contenu est livré par portions, de préférence dans des récipients d'échantillon, au moins deux tubes (3, 4) débouchant dans ledit terminal, l'un des tubes étant un tube de réception (3) et l'autre tube étant un tube d'expédition (4), **caractérisé en ce qu'**un organe d'individualisation (6) est disposé en amont du terminal (1), et une unité à fonction de déchargement (7) prenant en charge le contenu des curseurs (2) pour le transférer à une station d'analyse (22) ou à un autre traitement ultérieur est mise à disposition, le tube d'expédition (4) permettant de renvoyer les curseurs (2) indépendamment du tube de réception (3), et le tube de réception (3), le tube d'expédition (4) et l'unité à fonction de déchargement (7) étant associés au sein du terminal (1), respectivement, à une position de réception, à une position d'expédition et à une position de déchargement, la position d'expédition étant différente de la position de réception, et qu'au sein du terminal (1), un chariot (5) est monté de manière être mobile au moins entre ces différentes positions.

2. Terminal (1) selon la revendication 1, **caractérisé en ce qu'**une unité de contrôle (8) pouvant être retirée par pivotement est disposée en aval de l'unité à fonction de déchargement (7).

3. Terminal (1) selon l'une des revendications 1 ou 2, **caractérisé en ce que** le terminal (1) comporte un dispositif d'identification (9), ce dernier pouvant être également disposé en amont de du terminal (1).

4. Terminal (1) selon la revendication 3, **caractérisé en ce que** le terminal (1) comporte une ouverture (10) qui permet d'extraire des curseurs (2) tout en étant associée à une position d'extraction, et que le chariot (5) est monté de manière à être mobile entre la position d'extraction, la position de réception, la position d'expédition et la position de déchargement.

5. Terminal (1) selon l'une des revendications 1 à 4, **caractérisé en ce que** l'organe d'individualisation (6), disposé en amont du terminal (1), comporte au moins un élément de transport qui est sollicité par un ressort vers le milieu du tube.

6. Terminal (1) selon l'une des revendications 1 à 5, **caractérisé en ce qu'**un obturateur coulissant (12) est monté entre l'organe d'individualisation (6) et le terminal (1), permettant ainsi d'arrêter un curseur pour une courte durée pour ensuite le libérer.
